# FASCICULE DE BREVET EUROPEEN

(11) **EP 4 278 074 B1**
(45) Date de publication et mention de la délivrance du brevet: **04.12.2024**
(21) Numéro de dépôt: 22702510.3
(22) Date de dépôt: 10.01.2022
(51) Int. Cl.: F02C 3/107, F02C 7/06, F02C 7/28

(54) **MODULE DE SOUFFLANTE COMPRENANT DES MOYENS D'ETANCHEITE AMELIORES D'UNE ENCEINTE DE LUBRIFIANT**
GEBLÄSEMODUL MIT VERBESSERTEN DICHTUNGSMITTELN FÜR EINE SCHMIERMITTELKAMMER
FAN MODULE COMPRISING IMPROVED SEALING MEANS FOR A LUBRICANT CHAMBER

(30) Priorité: 15.01.2021 FR 2100395
(43) Date de publication de la demande: 22.11.2023
(73) Titulaire: SAFRAN AIRCRAFT ENGINES, 75015 Paris (FR)
(72) Inventeur: BECOULET, Julien Fabien Patrick, 77550 MOISSY-CRAMAYEL (FR); FORMICA, Olivier, 77550 MOISSY-CRAMAYEL (FR)
(74) Mandataire: Gevers & Orès
(86) Numéro de dépôt international: PCT/FR2022/050052
(87) Numéro de publication internationale: WO 2022/153000

(56) Documents cités:
- WO-A1-2018/113332
- FR-A1- 3 075 881

## Description

### Domaine de l'invention

La présente invention concerne le domaine des turbomachines. Elle vise en particulier un module de soufflante dont l'arbre de soufflante est entraîné par un arbre de turbine par l'intermédiaire d'un mécanisme de transmission de puissance et des moyens d'étanchéité d'une enceinte de lubrifiant dans laquelle est installé ce mécanisme de transmission de puissance.

### Arrière-plan technique

Des turbomachines, telles que des turbomachines doubles flux, comportent généralement une soufflante disposée en amont d'un générateur de gaz selon la circulation des gaz dans la turbomachine. Le générateur de gaz est logé dans un carter interne annulaire tandis que la soufflante est logée dans un carter externe annulaire solidaire généralement d'une nacelle. La soufflante entraine un flux qui se divise en un flux primaire ou flux chaud circulant dans une veine primaire traversant le générateur de gaz et un flux secondaire ou flux froid circulant dans une veine secondaire autour du générateur de gaz.

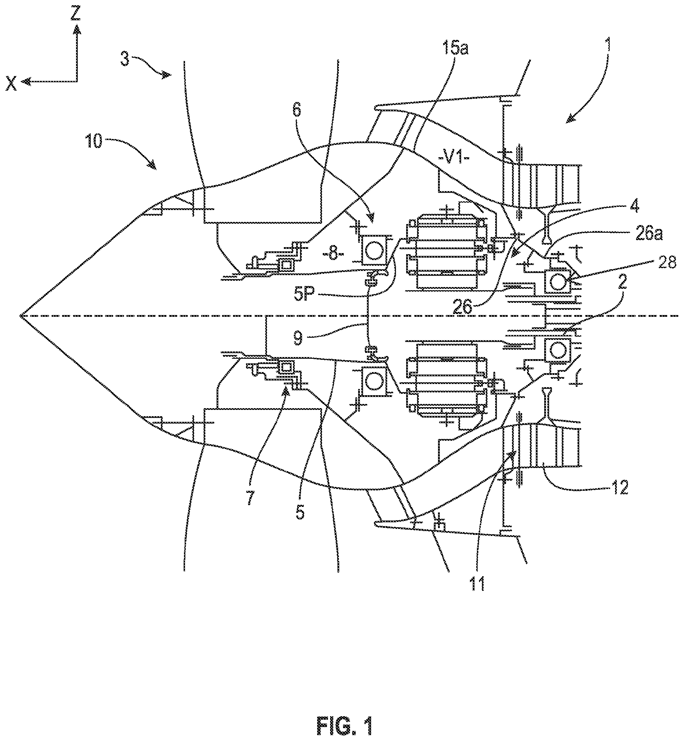

Telle que représentée sur la figure 1, la soufflante 3 de la turbomachine 1 est entraînée par un arbre basse pression 2, et éventuellement via un réducteur de vitesse 4. Ce dernier est couplé à un arbre 5 de la soufflante 3 sur lequel est emmanché un disque de soufflante portant les pales de la soufflante 3. L'arbre de soufflante 5 est supporté et guidé par des paliers qui comprennent des éléments roulants tels que des billes ou des rouleaux. Les paliers et les organes du réducteur de vitesse 4 nécessitent une lubrification et un refroidissement permanents pour assurer leur bon fonctionnement. Un premier palier 6, un deuxième palier 7 de l'arbre de soufflante 5 et le réducteur 4 sont à cet effet agencés dans une seule enceinte 8 disposée en amont de la turbomachine. L'arbre de soufflante est creux et est ouvert à chacune de ses extrémités. De plus, le montage de l'arbre de soufflante sur le réducteur de vitesse implique qu'au moins une partie de l'intérieur de l'arbre de soufflante fait partie de l'enceinte. A cet effet, cette enceinte 8 est fermée en amont, de manière étanche, par un premier couvercle 9 qui est monté dans l'arbre de soufflante 5, au niveau de son extrémité aval 5P et au niveau du premier palier 6. L'enceinte 8 est également fermée en aval par un deuxième couvercle au moins en partie dans l'arbre basse pression. L'entrée 26 du lubrifiant dans l'enceinte pour la lubrification des paliers et du réducteur de vitesse se fait généralement en aval du réducteur de vitesse et plus précisément au niveau d'une virole 26a. Un exemple d'arbre de soufflante avec un premier couvercle monté dans celui-ci mais à l'écart de l'extrémité amont est décrit dans le document FR-A1 -3075881.

Un autre exemple d'agencement du couvercle en amont de l'arbre de soufflante d'une turbomachine est détaillé dans le document FR3013385 et dans le document WO2018/113332.

Cependant, dans les exemples d'agencement ci-dessus, l'arbre de sortie du réducteur de vitesse et l'arbre de soufflante ont une géométrie complexe avec des épaulements, par exemple, qui favorisent la rétention de lubrifiant (provenant de la sortie d'huile) ou d'eau (issue de fonte de bloc de glace par exemple) dans certaines zones de ceux-ci. Une zone de rétention qui est située vers l'extrémité libre de l'arbre de soufflante est particulièrement propice à ce genre de rétention. Or, les rétentions génèrent des balourds liquides (ex : balourd d'huile ou d'eau) qui ont un impact négatif sur le comportement dynamique de la turbomachine.

La présente invention a pour but de pallier les inconvénients précités, en fournissant en particulier des moyens d'étanchéité de l'enceinte d'huile permettant une rétention efficace pour la lubrification des éléments qu'elle renferme et tout en évitant les phénomènes de balourds préférentiellement liquides (ex : balourd d'huile ou d'eau).

### Résumé de l'invention

On parvient à cet objectif conformément à l'invention grâce à un module de soufflante de turbomachine comprenant un arbre de soufflante cylindrique de la soufflante d'axe longitudinal X entraîné en rotation par un arbre de puissance via un réducteur de vitesse et une enceinte de lubrification traversée axialement par au moins une partie de l'arbre de soufflante et de l'arbre de puissance, et dans laquelle sont disposés au moins un premier palier destiné à porter et guider en rotation l'arbre de soufflante et le réducteur de vitesse, l'arbre de soufflante comprenant au moins une première partie tubulaire faisant partie de l'enceinte et étant fermée par un couvercle, la première partie tubulaire comprenant une extrémité distale, une extrémité proximale opposées suivant l'axe longitudinale X et une baignoire annulaire, ménagée dans une surface interne de l'arbre de soufflante, entre l'extrémité distale et l'extrémité proximale, ledit couvercle comprenant un corps qui s'étend suivant l'axe longitudinal X et qui est monté dans la première portion tubulaire de sorte à couvrir et fermer de manière étanche la baignoire annulaire.

Ainsi, cette solution permet d'atteindre l'objectif susmentionné. En particulier, la configuration du couvercle et son agencement à l'intérieur de l'arbre de soufflante permet d'isoler la baignoire de manière à empêcher l'introduction de tout fluide dans celle-ci et qui pourrait stagner à l'intérieur de celle-ci en engendrant des balourds, notamment des balourds liquides. De plus, cette solution est simple, facile et peu coûteuse à fabriquer ainsi qu'à mettre en oeuvre.

Le module comprend également l'une ou plusieurs des caractéristiques suivantes, prises seules ou en combinaison :
- le corps comprend une section transversale circulaire avec un diamètre variant entre la première extrémité et la deuxième extrémité.
- le corps s'étend entre une première extrémité et une deuxième extrémité, la première extrémité comprenant une première gorge ouverte sur une paroi externe du corps et suivant la circonférence de celle-ci, la première gorge étant destinée à recevoir des premiers éléments d'étanchéité aptes à coopérer avec la surface interne de la première partie tubulaire de l'arbre de soufflante.
- la deuxième extrémité comprend une deuxième gorge ouverte sur la paroi externe du corps et suivant la circonférence de celle-ci, la deuxième gorge étant destinée à recevoir des deuxièmes éléments d'étanchéité aptes à coopérer avec la surface interne de la première partie tubulaire de l'arbre de soufflante.

- la première extrémité est fixée à l'extrémité distale de la première partie tubulaire et la deuxième extrémité est disposée à l'intérieur de la première partie tubulaire.
- la première partie tubulaire comprend un renflement annulaire faisant saillie radialement vers l'intérieur de l'arbre de soufflante et délimitant en aval la baignoire, la deuxième extrémité du couvercle venant en butée radiale contre le renflement annulaire.
- les deuxièmes éléments d'étanchéité comprennent une lèvre radiale, flexible, destinée à être en appui radiale contre la surface interne de la première partie tubulaire.
- le couvercle présente un diamètre externe maximal inférieur au diamètre interne minimal de la première partie tubulaire de l'arbre de soufflante.
- le couvercle est monté de manière amovible dans la première partie tubulaire de l'arbre de soufflante.
- le corps longitudinal du couvercle s'étend radialement à l'intérieur de la baignoire.
- le module de soufflante comprend un deuxième palier destiné à porter et guider en rotation l'arbre de soufflante, et agencé en amont du premier palier, la deuxième extrémité du couvercle étant proche du deuxième palier.
- le module comprend des moyens de maintien axial de la première extrémité du premier couvercle à l'extrémité distale de la première partie tubulaire de l'arbre de soufflante et configurés pour retenir axialement le couvercle par rapport à l'arbre de soufflante et dans l'arbre de soufflante.
- des premiers et deuxièmes éléments d'étanchéité sont agencés radialement entre le corps du couvercle et l'arbre de soufflante.
- le couvercle comprend un alésage cylindrique taraudé et centré sur l'axe longitudinal X.

L'invention concerne également une turbomachine comprenant un module de soufflante qui présente les caractéristiques telles que susmentionnées.

L'invention concerne en outre un aéronef comprenant au moins une turbomachine telle que susmentionnée.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 représente une coupe axiale et partielle d'une turbomachine comprenant un module de soufflante en amont d'un générateur de gaz et à laquelle s'applique l'invention ;
[Fig. 2] La figure 2 est une vue schématique, en coupe axiale et partielle d'un module de soufflante comprenant au moins un palier et un réducteur de vitesse agencés dans une enceinte de lubrification selon l'invention ;
[Fig. 3] La figure 3 est une vue de détail de l'intégration d'un couvercle d'étanchéité de l'enceinte de lubrification du module de soufflante représenté sur la figure 2 ;
[Fig. 4] La figure 4 illustre de manière schématique et partiellement un exemple de couvercle d'étanchéité selon l'invention; et,
[Fig. 5] La figure 5 est vue en coupe axiale et partielle d'un autre exemple de couvercle monté en amont d'un arbre de soufflante d'un module de soufflante selon l'invention.

### Description détaillée de l'invention

La figure 1 a été décrite dans ce qui précède. Les éléments décrits précédemment et identiques dans la suite de la présente description portent les mêmes références numériques.

Dans la présente invention, et de manière générale, les termes « amont » et « aval » sont définis par rapport à la circulation des gaz dans la turbomachine qui est sensiblement parallèle à l'axe longitudinal X. De même, les termes « interne », « externe », « inférieur » et « supérieur » sont définis par rapport à un axe radial Z perpendiculaire à l'axe longitudinal X et au regard de l'éloignement par rapport à l'axe longitudinal X.

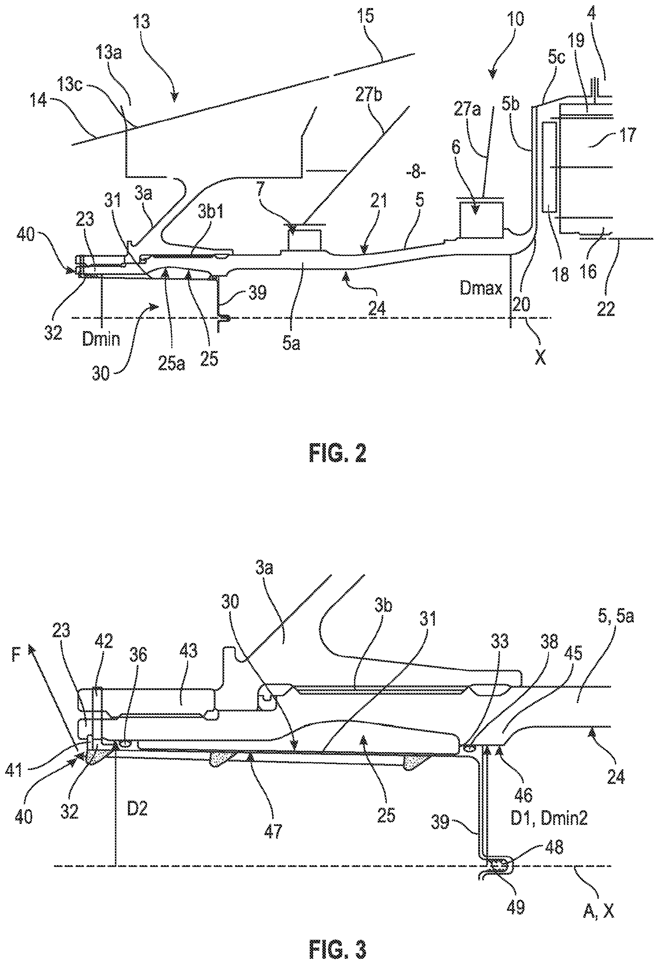

La figure 2 illustre un module de soufflante 10 avec une soufflante 3 agencée en amont d'un générateur de gaz 11 d'une turbomachine 1. Cette dernière est destinée à être montée sur un aéronef et est du type double flux et double corps. La turbomachine est axisymétrique par rapport à l'axe longitudinal X. Bien entendu, l'invention s'applique à d'autres types de turbomachine.

Le générateur de gaz 11 comprend par exemple, d'amont en aval, un compresseur basse pression 12 (représenté sur la figure 1), un compresseur haute pression (non représenté), une chambre de combustion (non représentée), une turbine haute pression (non représentée) et une turbine basse pression (non représentée).

Le module 10 comprend un arbre de soufflante 5 qui est centré sur l'axe longitudinal X. Un disque 3a de soufflante est emmanché sur l'arbre de soufflante 5. La soufflante comprend une série d'aubes de soufflante 13 qui s'étendent radialement vers l'extérieur depuis le disque 3a de soufflante et qui sont délimitées radialement par un carter de soufflante (non représenté). En particulier, chaque aube de soufflante 13 comprend une pale 13a, un pied (non représenté) et une plateforme 13c. La plateforme 13c sépare la pale 13a du pied. Le disque 3a comprend une pluralité d'alvéoles réparties régulièrement autour de l'axe longitudinal et dans lesquelles sont reçus les pieds des aubes de soufflante 13. Le module 10 comprend également, en amont, un cône d'entrée 14 qui enveloppe l'arbre de soufflante 5 en formant une continuité aérodynamique avec chaque plateforme 13c des aubes de soufflante 13. La plateforme 13c présente également, en aval, une continuité de surface avec un carter interne 15. Ce dernier détermine une paroi radialement interne 15a de la veine primaire V1 traversant le générateur de gaz et enveloppe au moins partie le réducteur de vitesse 4.

L'arbre de soufflante 5 est cylindrique, creux. Ce dernier comprend d'amont en aval, une première partie tubulaire 5a s'étendant suivant l'axe longitudinal X, une deuxième partie formant un voile radial 5b s'étendant suivant l'axe radial vers l'extérieur, et une troisième partie se présentant sous la forme d'une virole 5c annulaire d'axe longitudinal X. La première partie tubulaire 5a, le voile radial 5b, et la virole 5c sont reliés les uns aux autres par des rayons de raccordement. Dans le présent exemple, la première partie tubulaire 5a, le voile radial 5b et la virole 5c sont formés d'une seule pièce. De manière alternative, la première partie tubulaire 5a et le voile radial 5b sont monoblocs, la virole étant rapportée et fixée sur le voile radial 5b. Suivant encore une autre alternative, la première partie tubulaire 5a, le voile radial 5b et la virole 5c sont des pièces indépendantes fixées entre elles.

L'arbre de soufflante 5 est entraîné en rotation par un arbre de puissance de la turbomachine via un mécanisme de transmission de puissance permettant de réduire la vitesse de rotation de la soufflante 3. Cet arbre de puissance est un arbre de turbine basse pression 22 dans le présent exemple. Le mécanisme de transmission de puissance permet l'agencement d'une soufflante avec un diamètre important lequel permet une augmentation du taux de dilution. Dans le présent exemple, le taux de dilution de la soufflante est supérieur à 10. De préférence, le taux de dilution est compris entre 15 et 20.

Le mécanisme de transmission de puissance comprend un réducteur de vitesse 4 formé d'un train d'engrenage et connu sous l'acronyme anglais RGB pour « Réduction Gear Box ». Le train d'engrenage est épicycloïdal ou planétaire. En particulier, le réducteur de vitesse 4 illustré sur la figure 1 comprend un planétaire interne dénommé ici planétaire 16, des satellites 17, un porte-satellites 18 et une couronne extérieure 19. Dans le présent exemple, l'entrée du réducteur de vitesse 4 est couplée à l'arbre de turbine 22 basse pression tandis que la sortie du réducteur de vitesse 4 est couplée à l'arbre de soufflante 5. A cet effet, le réducteur de vitesse 4 comprend un arbre d'entrée solidaire en rotation avec l'arbre de turbine basse pression. De manière avantageuse, l'arbre d'entrée est couplé au planétaire 16 centré sur l'axe longitudinal X. L'arbre de soufflante 5 est couplé à la couronne extérieure 19 via la virole 5c qui assure la fixation de l'arbre de soufflante 5 à la couronne externe 19. Le voile radial 5b permet que l'arbre de soufflante 5 s'adapte à la géométrie du réducteur de vitesse 4. Les satellites 17 sont portés par le porte-satellites 18 et tournent chacun autour d'un axe sensiblement parallèle à l'axe longitudinal X. Chacun des satellites 18 engrène avec le planétaire 16 et la couronne extérieure 19.

D'autres agencements du réducteur de vitesse 4 sont, bien entendu, envisageables. Par exemple, la sortie du réducteur de vitesse 4 est solidaire de la virole 5c de l'arbre de soufflante et du porte-satellites 18. La virole 5c assure la fixation de l'arbre de soufflante 5 sur le porte-satellites 18. L'arbre d'entrée du réducteur de vitesse 4 est solidaire en rotation avec l'arbre de turbine basse pression 22 et au planétaire centré sur l'axe longitudinal X.

Sur la figure 2, l'arbre de soufflante 5 est porté et guidé en rotation par un premier palier 6 qui est disposé vers une extrémité proximale 20 de de la première partie 5a de l'arbre de soufflante 5. A l'extrémité proximale 20 est définie une ouverture bordée par une surface annulaire d'axe longitudinal X. Le voile radial 5b s'étend depuis l'extrémité proximale 20 de la première partie tubulaire 5a. Un deuxième palier 7 est également prévu pour porter et guider en rotation l'arbre de soufflante 5. Le deuxième palier 7 est monté axialement en amont du premier palier 6 lequel est agencé en amont du réducteur de vitesse 4. La première partie 5a de l'arbre de soufflante 5 permet l'aménagement de portées pour les premier et deuxième paliers 6, 7. Les premier et deuxième paliers 6, 7 à roulement comprennent chacun une bague interne montée sur une surface externe 21 de l'arbre de soufflante 5 (la portée de la première partie tubulaire 5a) et une bague externe montée sur une virole de support 27a, 27b. Les éléments roulants du premier palier 6 sont ici des billes tandis que les éléments roulants du deuxième palier 7 sont des rouleaux.

Comme cela est visible sur la figure 2, l'arbre de soufflante 5 s'étend axialement entre l'extrémité proximale 20 et une extrémité distale 23. La première partie tubulaire 5a de l'arbre de soufflante 5 présente une section transversale circulaire. L'arbre de soufflante 5 présente une réduction de section depuis l'extrémité proximale 20 de la première partie 5a tubulaire, à son extrémité distale 23 opposée axialement. Le diamètre interne minimal Dmin est ainsi prévu à l'extrémité distale 23 de l'arbre de soufflante. Quant au diamètre interne maximal Dmax, ce dernier est prévu à l'extrémité proximale 20 de la première partie tubulaire 5a de l'arbre de soufflante 5.

La première partie tubulaire 5a comprend également une surface interne 24 qui est opposée radialement à la surface externe 21. Dans cette surface interne 24 est ménagée une baignoire 25 annulaire. Celle-ci s'étend en particulier sur toute la circonférence de la surface interne 24. La baignoire présente une surface 25a avec un fond définissant un diamètre supérieur au diamètre interne minimal Dmin qui se trouve à l'extrémité distale 23. La surface 25a présente une continuité de surface avec la surface interne 24 de la première partie tubulaire 5a. Comme cela est visible sur la figure 2, la baignoire 25 est formée radialement en-dessous des cannelures 3b1 du disque 3a et de l'arbre de soufflante 5. En particulier, l'arbre de soufflante 5 présente des cannelures sur sa surface externe et qui coopèrent avec des cannelures complémentaires agencées sur la surface interne du disque 3a. Ces cannelures 3b1 permettent la rotation solidaire du disque et de l'arbre de soufflante. La baignoire 25 présente une longueur axiale sensiblement égale à la longueur des cannelures 3b1.

Au moins les paliers 6, 7 et le réducteur 4 sont agencés dans une enceinte 8 dans laquelle circule un lubrifiant tel que de l'huile permettant de lubrifier et de refroidir les paliers et les organes du réducteur de vitesse 4 en permanence et notamment durant le fonctionnement de la turbomachine. Cela permet de garantir le bon fonctionnement des paliers 6, 7 et du réducteur de vitesse 4. Le lubrifiant est injecté dans l'enceinte 8 via l'entrée de lubrifiant 26 (cf. figure 1) au niveau des paliers 6, 7, des paliers qui se trouvent dans le réducteur de vitesse et des dentures (des satellites, de la couronne, du solaire) dans le réducteur de vitesse et au niveau d'un troisième palier 28 (représenté sur la figure 1) qui est situé en aval du réducteur de vitesse. Le troisième palier 28 porte et guide en rotation l'arbre basse pression 2, et en particulier l'arbre de turbine basse pression 22. Le troisième palier 28 est un palier à roulement qui comprend une bague interne montée sur une surface externe de l'arbre de turbine basse pression 22 et une bague externe montée sur une semelle qui est solidaire de la virole 26a. Les éléments roulants du troisième palier 28 sont ici des billes. L'enceinte 8 s'étend de part et d'autre du réducteur de vitesse 4 selon l'axe longitudinal X.

Sur la figure 2, l'enceinte 8 est traversée axialement au moins par une partie de l'arbre de soufflante 5. L'arbre de turbine basse pression 22 traverse également en partie l'enceinte 8. En d'autres termes, l'arbre de soufflante 5 et l'arbre de turbine basse pression 22 s'étendent au moins en partie dans cette enceinte 8. Dans le présent exemple, l'enceinte 8 est formée au moins de la paroi cylindrique de l'arbre de soufflante 5, des viroles de support 22a, 22b. Plus précisément encore, l'enceinte 8 s'étend à l'intérieur de l'arbre de soufflante et autour de l'arbre de soufflante 5.

En référence aux figures 2 et 3, l'enceinte 8 comprend également des moyens d'étanchéité fermant de manière étanche l'enceinte 8. Ces moyens d'étanchéité comprennent un premier couvercle 30 amovible fermant l'enceinte 8 en amont de manière étanche. Un deuxième couvercle (non représenté) amovible est prévu en aval pour fermer l'enceinte de manière étanche également. Le deuxième couvercle est monté radialement à l'intérieur de l'arbre de turbine basse pression 22 et à une extrémité amont de celui-ci. Ce deuxième couvercle est monté en aval du réducteur de vitesse 4 et ne fait pas partie de l'objet de l'invention.

Sur la figure 3 qui est une représentation partielle et de côté du premier couvercle 30, ce dernier comprend un corps 31 qui s'étend suivant un axe A entre une première extrémité 32 et une deuxième extrémité 33. Le corps 31 est creux et présente avantageusement une section transversale circulaire. Le corps 31 est de révolution autour de l'axe A. L'axe A est coaxial à l'axe longitudinal X en situation d'installation. Dans le présent exemple, le corps 31 présente un diamètre externe qui varie entre la première extrémité 32 et la deuxième extrémité 33. Avantageusement, le diamètre externe maximal D2 est situé au niveau de la première extrémité 32 et le diamètre externe minimal D1 est situé au niveau de la deuxième extrémité 33. Le corps 31 présente une section axiale sensiblement de forme tronconique et la paroi du corps 31 est inclinée par rapport à l'axe A.

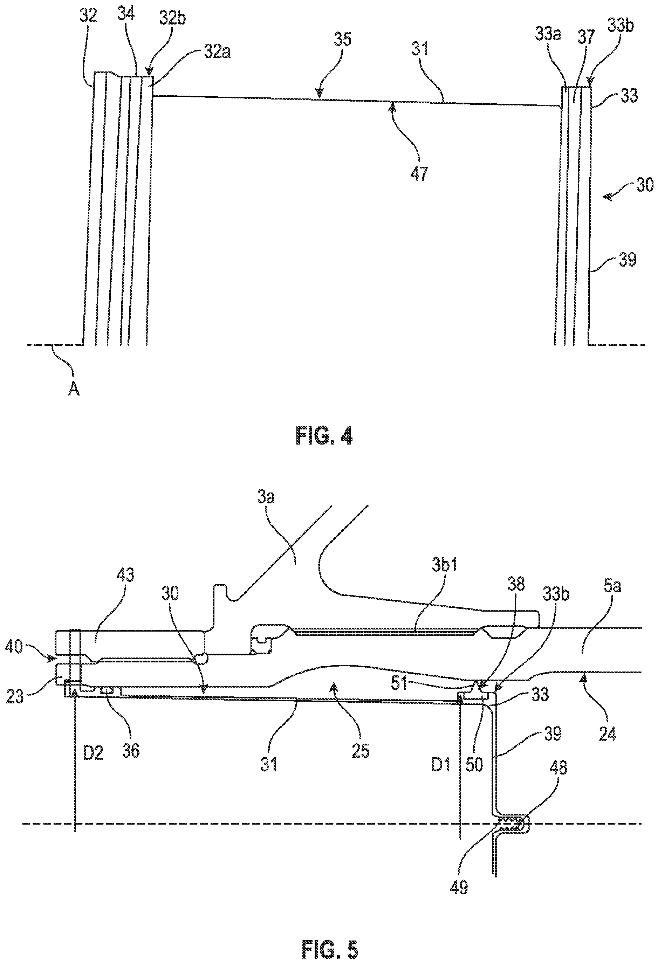

Sur la figure 4, le couvercle 30 comprend une première gorge 34 ouverte sur une paroi externe 35 du corps et suivant la circonférence de celle-ci. En particulier, la première gorge 34 est portée par une première collerette 32a annuaire qui s'étend radialement à l'extérieur du corps par rapport à l'axe A du corps. La première gorge 34 présente une section sensiblement en forme de U. Celle-ci est destinée à recevoir des premiers éléments d'étanchéité 36 représentés sur la figure 3. Les premiers éléments d'étanchéité 36 sont aptes à coopérer avec la surface interne 24 de la première partie tubulaire 5a de l'arbre de soufflante 5. Les premiers éléments d'étanchéité 36 comprennent ici un joint annulaire. Une deuxième gorge 37 est également prévue dans la paroi externe du corps. Cette deuxième gorge 37 est ménagée vers la deuxième extrémité 33. La deuxième gorge 37 est également destinée à recevoir des deuxièmes éléments d'étanchéité 38 qui sont représentés sur la figure 3. Les deuxièmes éléments d'étanchéité 38 sont aptes à coopérer avec la surface interne 24 de la première partie tubulaire de l'arbre de soufflante 5. La deuxième gorge 37 est également portée par une deuxième collerette 33a annuaire qui s'étend radialement à l'extérieur du corps par rapport à l'axe A du corps.

Le couvercle 30 présente également une paroi 39 radiale centrée sur l'axe longitudinal X et qui ferme partiellement le premier couvercle 30 au niveau de sa deuxième extrémité 33. En d'autres termes, le corps longitudinal 31 s'élève depuis la paroi radiale 39. La paroi radiale 39 est définie sensiblement dans un plan qui est perpendiculaire à l'axe A ou l'axe longitudinal X.

Sur la figure 2, le couvercle 30 est monté dans la première portion tubulaire 5a de sorte à couvrir et fermer de manière étanche la baignoire 25 annulaire. Le couvercle 30 est monté axialement au niveau de l'extrémité distale 23 de la première partie tubulaire 5a de l'arbre de soufflante 5 et le corps s'étend en aval et à l'intérieur de la première partie du tubulaire 5a. En particulier, le couvercle 30 est situé axialement en amont du deuxième palier 7 à roulement.

Plus précisément encore et comme cela est illustré en détails sur la figure 3, la première extrémité 32 est fixée à l'extrémité distale 23 de la première partie tubulaire 5a (extrémité libre de l'arbre de soufflante 5). Avantageusement, mais non limitativement, la première extrémité 32 est montée serrée dans l'arbre de soufflante 5. En effet, le diamètre externe D2 du couvercle 30 est inférieur ou sensiblement égal au diamètre interne minimal Dmin de l'arbre de soufflante 5 au niveau de l'extrémité distale 23. Des moyens de maintien axial 40 sont agencés pour retenir en position axiale la première extrémité 32 du couvercle 30 par rapport à l'arbre de soufflante 5 et à l'intérieur de celui-ci.

Sur la figure 3, les moyens de maintien axial 40 comprennent un anneau fendu 41 qui est reçu dans une rainure annulaire ouverte sur la surface interne 24 et à l'extrémité distale 23 de la première partie tubulaire 5a. La rainure est orientée vers l'intérieur de l'arbre de soufflante. L'anneau fendu 41 forme un circlip et est agencé en amont de la première extrémité 32 du couvercle 30. De même, l'anneau fendu 41 est monté en amont d'un pion anti-rotation 42 engagé dans un écrou 43. L'écrou 43 est vissé sur l'extrémité distale 23 de la deuxième partie tubulaire 5a de l'arbre de soufflante 5. L'écrou 43 est en butée axial contre un épaulement du disque 3a de la soufflante 3. De la sorte, l'écrou 43 permet d'immobiliser axialement le disque 3a sur l'arbre de soufflante 5 et le pion anti-rotation 42 assure d'une part, le blocage en rotation de l'écrou 43 par apport à l'arbre de soufflante 5 et d'autre part, le desserrement accidentel de l'écrou 43.

Comme nous pouvons le voir également sur la figure 3, la deuxième extrémité 33 du couvercle 30 est disposée à l'intérieur de la première partie tubulaire 5a. Plus précisément, la deuxième extrémité 33 est agencée au niveau d'un renflement 45 annulaire de la première partie tubulaire 5a. Le renflement 45 fait saillie radialement vers l'intérieur de l'arbre de soufflante 5. Le renflement 45 délimite également en aval la baignoire 25 annulaire. Le renflement 45 présente une surface radiale interne 46 qui définit un diamètre interne Dmin2 qui est inférieur au diamètre interne minimal Dmin de l'arbre de soufflante 5 au niveau de l'extrémité distale 23. De même, le diamètre externe D1 du couvercle 30 à sa deuxième extrémité 33 est inférieur ou égal au diamètre Dmin2. De la sorte, la deuxième extrémité 33 du couvercle 30 est en butée radiale contre le renflement 45 annulaire. Les deuxièmes éléments d'étanchéité 38 sont également agencés radialement entre le renflement 45 et la deuxième extrémité 33 du couvercle 30. Les deuxièmes éléments d'étanchéité 38 comprennent ici un joint torique.

En référence aux figure 3 et 4, lors de l'insertion du couvercle 30 à l'intérieur de l'arbre de soufflante, la deuxième extrémité 33 du couvercle peut s'insérer sans blocage au niveau de l'entrée de l'arbre de soufflante (extrémité distale 23), puis la surface 33b (cf. figure 4) de la deuxième collerette 33a vient en appui plan avec la surface 46 (cf. figure 3) du renflement. Le joint torique 38 s'écrase entre la gorge 37 et la surface 46. De même, la surface 32b (cf. figure 4) de la première collerette 32a vient en appui plan avec la surface interne (cf. figure 3) de l'arbre de soufflante à l'entrée de ce dernier. Le joint annulaire 36 s'écrase entre la gorge 34 et la surface interne.

De la sorte, la baignoire 25 annulaire est couverte axialement par le corps 31 longitudinal du couvercle 30 et les éléments d'étanchéité 36, 38 montés en amont et en aval réalisent une étanchéité de la baignoire 25. Le lubrifiant ne circule plus en amont dans l'arbre de soufflante 5 car celui-ci est bloqué par la paroi radiale 39. Par ailleurs, un autre fluide tel que de l'eau issue de la fonte de bloc de glace, en cas d'accrétion sur le cône 14 (lors de conditions givrantes par exemple), est acheminé directement à l'intérieur du couvercle 30. Avec la force centrifuge, le corps 31 incliné du couvercle permet d'évacuer le fluide à l'extérieur du couvercle 30. Le fluide glisserait sur la paroi interne 47 du corps vers l'extérieur comme cela est représenté par la flèche F. La baignoire 25 est, en d'autres termes, fermée par le corps 31 du couvercle 30 et les éléments d'étanchéité 36, 38.

Un autre mode de réalisation de l'agencement du couvercle 30 dans l'arbre de soufflante 5 est illustré sur la figure 5. Dans cet exemple, l'arbre de soufflante 5 est dépourvu de renflement. La deuxième extrémité 33 du couvercle 30 est positionnée en aval de la baignoire 25. Les deuxièmes éléments d'étanchéité 38 (installés dans la gorge 37) comprennent un joint annulaire avec un corps 50 annulaire et une lèvre radiale 51 s'étendant depuis le corps 50. Cette lèvre radiale 51 est flexible. En situation d'installation, la lèvre radiale 51 est en appui radiale contre la surface interne 24 de la première partie tubulaire 5a. Lors de l'insertion du couvercle 30 à l'intérieur de l'arbre de soufflante, le joint à lèvre va pouvoir se plier à l'entrée de l'arbre de soufflante (extrémité distale 23) et reprendre sa forme lorsque celui-ci aura plus de place radialement (en dessous des cannelures 3b1 par exemple). La surface 33b de la deuxième collerette se trouve à distance radialement de la surface interne 24 de l'arbre de soufflante 5 contrairement à la lèvre radiale 51 flexible. Comme pour le premier mode de réalisation, la baignoire 25 annulaire est couverte axialement par le corps 31 longitudinal du couvercle 30 et les éléments d'étanchéité 36, 38 montés en amont et en aval réalisent une étanchéité de la baignoire.

Dans les différents modes de réalisation, et afin de permettre une extraction aisée du premier couvercle 30 par l'amont de l'arbre de soufflante 5, la paroi 39 radiale du premier couvercle 30 comprend un alésage cylindrique 48 centré sur l'axe longitudinal X. Cet alésage cylindrique 48 comprend un taraudage 49 destiné à coopérer avec un outil (non représenté) ayant une portion filetée. Une telle configuration permet de saisir le premier couvercle 30 sans efforts, ni obstacles.

## Revendications

1. Module de soufflante (10) de turbomachine (1) comprenant un arbre de soufflante (5) cylindrique de la soufflante (3) d'axe longitudinal X entraîné en rotation par un arbre de puissance (22) via un réducteur de vitesse (4) et une enceinte (8) de lubrification traversée axialement par au moins une partie de l'arbre de soufflante (5) et de l'arbre de puissance (22), et dans laquelle sont disposés au moins un premier palier (6, 7) destiné à porter et guider en rotation l'arbre de soufflante (5) et le réducteur de vitesse (4), l'arbre de soufflante (5) comprenant au moins une première partie tubulaire (5a) faisant partie de l'enceinte (8) et étant fermée par un couvercle (30), la première partie tubulaire (5a) comprenant une extrémité distale (23), une extrémité proximale (20) opposées suivant l'axe longitudinale X et une baignoire (25) annulaire, ménagée dans une surface interne (24) de l'arbre de soufflante, entre l'extrémité distale (23) et l'extrémité proximale (20) **caractérisé en ce que** ledit couvercle (30) comprend un corps (31) qui s'étend suivant l'axe longitudinal X et qui est monté dans la première portion tubulaire (5a) de sorte à couvrir et fermer de manière étanche la baignoire (25) annulaire.

2. Module de soufflante (10) selon la revendication précédente, **caractérisé en ce que** le corps (31) s'étend entre une première extrémité (32) et une deuxième extrémité (33) suivant l'axe longitudinal X, et comprend une section transversale circulaire avec un diamètre variant entre la première extrémité (32) et la deuxième extrémité (33).

3. Module de soufflante (10) selon la revendication précédente, **caractérisé en ce que** la première extrémité (32) comprend une première gorge (34) ouverte sur une paroi externe (35) du corps (31) et suivant la circonférence de celle-ci, la première gorge (34) étant destinée à recevoir des premiers éléments d'étanchéité (36) aptes à coopérer avec la surface interne (24) de la première partie tubulaire de l'arbre de soufflante.

4. Module de soufflante (10) selon la revendication précédente, **caractérisé en ce que** la deuxième extrémité (33) comprend une deuxième gorge (37) ouverte sur la paroi externe (35) du corps (31) et suivant la circonférence de celle-ci, la deuxième gorge (37) étant destinée à recevoir des deuxièmes éléments d'étanchéité (38) aptes à coopérer avec la surface interne (24) de la première partie tubulaire (5a) de l'arbre de soufflante.

5. Module de soufflante (10) selon l'une quelconque des revendications 2 à 4, **caractérisé en ce que** la première extrémité (32) est fixée à l'extrémité distale (23) de la première partie tubulaire (5a) et la deuxième extrémité (33) est disposée à l'intérieur de la première partie tubulaire (5a).

6. Module selon l'une quelconque des revendications 2 à 5, **caractérisé en ce que** la première partie tubulaire (5a) comprend un renflement (45) annulaire faisant saillie radialement vers l'intérieur de l'arbre de soufflante (5) et délimitant en aval la baignoire (25), la deuxième extrémité (33) du couvercle (30) venant en butée radiale contre le renflement (45) annulaire.

7. Module selon la revendication 4 ou selon les revendications 4 et 5, **caractérisé en ce que** les deuxièmes éléments d'étanchéité (38) comprennent une lèvre radiale (51), flexible, destinée à être en appui radiale contre la surface interne (24) de la première partie tubulaire (5a).

8. Module de soufflante (10) selon l'une quelconque des revendications 2 à 7, **caractérisé en ce que** le couvercle (30) présente un diamètre externe maximal (D1) inférieur au diamètre interne minimal (Dmin) de la première partie tubulaire (5a) de l'arbre de soufflante (5).

9. Module de soufflante (10) selon l'une quelconque des revendications précédentes, **caractérisé en ce que** le couvercle (30) est monté de manière amovible dans la première partie tubulaire (5a) de l'arbre de soufflante (5).

10. Turbomachine comprenant un module de soufflante selon l'une quelconque des revendications précédentes.

## Patentansprüche

1. Gebläsemodul (10) eines Turbotriebwerks (1), umfassend eine zylindrische Gebläsewelle (5) des Gebläses (3) mit Längsachse X, die durch eine Leistungswelle (22) über ein Untersetzungsgetriebe (4) in Drehung versetzt wird, und eine Schmiermittelkammer (8), die axial von mindestens einem Teil der Gebläsewelle (5) und der Leistungswelle (22) durchquert wird, und wobei mindestens ein erstes Lager (6, 7) angeordnet ist, das dazu vorgesehen ist, die Gebläsewelle (5) und das Untersetzungsgetriebe (4) zu stützen und drehend zu führen, wobei die Gebläsewelle (5) mindestens einen ersten rohrförmigen Teil (5a) umfasst, der Teil der Kammer (8) ist und durch eine Abdeckung (30) verschlossen wird, wobei der erste rohrförmige Teil (5a) ein distales Ende (23), ein proximales Ende (20), die sich entlang der Längsachse X gegenüberliegen, und eine ringförmige Wanne (25) umfasst, die in einer Innenfläche (24) der Gebläsewelle zwischen dem distalen Ende (23) und dem proximalen Ende (20) eingerichtet ist, **dadurch gekennzeichnet, dass** die Abdeckung (30) einen Körper (31) umfasst, der sich entlang der Längsachse X erstreckt und der derart im ersten rohrförmige Abschnitt (5a) angebracht ist, dass er auf dichte Weise die ringförmige Wanne (25) bedeckt und verschließt.

2. Gebläsemodul (10) nach dem vorstehenden Anspruch, **dadurch gekennzeichnet, dass** sich der Körper (31) entlang der Längsachse X zwischen einem ersten Ende (32) und einem zweiten Ende (33) erstreckt und einen kreisförmigen Querschnitt mit einem zwischen dem ersten Ende (32) und dem zweiten Ende (33) schwankenden Durchmesser umfasst.

3. Gebläsemodul (10) nach dem vorstehenden Anspruch, **dadurch gekennzeichnet, dass** das erste Ende (32) eine erste Verengung (34) umfasst, die zu einer Außenwand (35) des Körpers (31) offen ist und dem Umfang dieser folgt, wobei die erste Verengung (34) dazu vorgesehen ist, erste Dichtungselemente (36) aufzunehmen, die geeignet sind, mit der Innenfläche (24) des ersten rohrförmigen Teils der Gebläsewelle zusammenzuwirken.

4. Gebläsemodul (10) nach dem vorstehenden Anspruch, **dadurch gekennzeichnet, dass** das zweite Ende (33) eine zweite Verengung (37) umfasst, die zur Außenwand (35) des Körpers (31) offen ist und dem Umfang dieser folgt, wobei die zweite Verengung (37) dazu vorgesehen ist, zweite Dichtungselemente (38) aufzunehmen, die geeignet sind, mit der Innenfläche (24) des ersten rohrförmigen Teils (5a) der Gebläsewelle zusammenzuwirken.

5. Gebläsemodul (10) nach einem der Ansprüche 2 bis 4, **dadurch gekennzeichnet, dass** das erste Ende (32) am distalen Ende (23) des ersten rohrförmigen Teils (5a) befestigt ist und das zweite Ende (33) an der Innenseite des ersten rohrförmigen Teils (5a) angeordnet ist.

6. Modul nach einem der Ansprüche 2 bis 5, **dadurch gekennzeichnet, dass** der erste rohrförmige Teil (5a) eine ringförmige Verdickung (45) umfasst, die zur Innenseite der Gebläsewelle (5) radial vorsteht und stromabwärts die Wanne (25) begrenzt, wobei das zweite Ende (33) der Abdeckung (30) radial an der ringförmigen Verdickung (45) anliegt.

7. Modul nach Anspruch 4 oder nach den Ansprüchen 4 und 5, **dadurch gekennzeichnet, dass** die zweiten Dichtungselemente (38) eine flexible, radiale Lippe (51) umfassen, die dazu vorgesehen ist, radial an der Innenfläche (24) des ersten rohrförmigen Teils (5a) aufzuliegen.

8. Gebläsemodul (10) nach einem der Ansprüche 2 bis 7, **dadurch gekennzeichnet, dass** die Abdeckung (30) einen maximalen Außendurchmesser (D1) aufweist, der kleiner ist als der minimale Innendurchmesser (Dmin) des ersten rohrförmigen Teils (5a) der Gebläsewelle (5).

9. Gebläsemodul (10) nach einem der vorstehenden Ansprüche, **dadurch gekennzeichnet, dass** die Abdeckung (30) auf abnehmbare Weise im ersten rohrförmigen Teil (5a) der Gebläsewelle (5) angebracht ist.

10. Turbotriebwerk, umfassend ein Gebläsemodul nach einem der vorstehenden Ansprüche.

## Claims

1. A fan module (10) for a turbomachine (1) comprising a cylindrical fan shaft (5) of the fan (3) with a longitudinal axis X driven in rotation by a power shaft (22) via a speed reducer (4) and a lubrication chamber (8) through which at least one portion of the fan shaft (5) and of the power shaft (22) pass axially, and in which are arranged at least one first bearing (6, 7) intended to support and guide in rotation the fan shaft (5) and the speed reducer (4), the fan shaft (5) comprising at least one first tubular portion (5a) forming part of the chamber (8) and being closed by a cover (30), the first tubular portion (5a) comprising a distal end (23), a proximal end (20) opposite one another along the longitudinal axis X and an annular squealer cavity (25) provided in an internal surface (24) of the fan shaft, between the distal end (23) and the proximal end (20), **characterised in that** said cover (30) comprises a body (31) which extends along the longitudinal axis X and which is mounted in the first tubular segment (5a) so as to cover and seal the annular squealer cavity (25).

2. The fan module (10) according to the preceding claim, **characterised in that** the body (31) extends between a first end (32) and a second end (33) along the longitudinal axis X, and comprises a circular cross-section with a diameter varying between the first end (32) and the second end (33).

3. The fan module (10) according to the preceding claim, **characterised in that** the first end (32) comprises a first gorge (34) open onto an external wall (35) of the body (31) and following the circumference thereof, the first gorge (34) being intended to receive first sealing elements (36) capable of cooperating with the internal surface (24) of the first tubular portion of the fan shaft.

4. The fan module (10) according to the preceding claim, **characterised in that** the second end (33) comprises a second gorge (37) open onto the external wall (35) of the body (31) and following the circumference thereof, the second gorge (37) being intended to receive second sealing elements (38) capable of cooperating with the internal surface (24) of the first tubular portion (5a) of the fan shaft.

5. The fan module (10) according to any one of claims 2 to 4, **characterised in that** the first end (32) is attached to the distal end (23) of the first tubular portion (5a) and the second end (33) is arranged inside the first tubular portion (5a).

6. The module according to any one of claims 2 to 5, **characterised in that** the first tubular portion (5a) comprises an annular bulge (45) projecting radially inwards the fan shaft (5) and delimiting the squealer cavity (25) downstream, the second end (33) of the cover (30) coming into radial abutment against the annular bulge (45).

7. The module according to claim 4 or according to claims 4 and 5, **characterised in that** the second sealing elements (38) comprise a flexible radial lip (51) intended to bear radially against the internal surface (24) of the first tubular portion (5a).

8. The fan module (10) according to any one of claims 2 to 7, **characterised in that** the cover (30) has a maximum external diameter (D1) smaller than the minimum internal diameter (Dmin) of the first tubular portion (5a) of the fan shaft (5).

9. The fan module (10) according to any of the preceding claims, **characterised in that** the cover (30) is removably mounted in the first tubular portion (5a) of the fan shaft (5).

10. A turbomachine comprising a fan module according to any one of the preceding claims.
